# EUROPÄISCHE PATENTANMELDUNG

(11) **EP 2 582 090 A1**
(43) Veröffentlichungstag der Anmeldung: **17.04.2013**
(21) Anmeldenummer: 12005986.0
(22) Anmeldetag: 22.08.2012
(51) Int. Cl.: H04L 12/24, G05B 19/042

(54) **Verfahren zur Konfigurierung einer Steuereinrichtung**

(30) Priorität: 13.10.2011 DE 102011115809
(71) Anmelder: ABB AG, 68309 Mannheim (DE)
(72) Erfinder: Meyer, Christian, 30880 Laatzen (DE)

(57) **Zusammenfassung**

Die Erfindung bezieht sich auf ein Verfahren zur Konfigurierung einer Steuereinrichtung für die Integration von intelligenten elektrischen Feldgeräten (IED) in ein Steuerungs- oder Automatisierungssystem mit einer flexibel ausbaubaren Hardwarestruktur, wobei die Konfiguration des Steuerungs- oder Automatisierungssystem mittels eines Gerätekonfigurationswerkzeug (30) und eines Systemkonfigurationswerkzeug (10) erstellt wird, im Systemkonfigurationswerkzeug (10) dazu eine Systemspezifikationsbeschreibung (SSD) abgelegt wird, welche den Datenaustausch vom Systemkonfigurationswerkzeug (10) zum Gerätekonfigurationswerkzeug (30) gemäß einem definierten Kommunikationsprotokoll festlegt, dem Gerätekonfigurationswerkzeug (30) eine Konfigurationsgerätebeschreibung (CID) bereitgestellt wird, welche den Datenaustausch vom Gerätekonfigurationswerkzeug (30) zum Gerät (IED) gemäß einem definierten Kommunikationsprotokoll festlegt, und im Gerätekonfigurationswerkzeug (30) aus der bereitgestellten Konfigurationsgerätebeschreibung (CID) und der vom Systemkonfigurationswerkzeug (10) bereitgestellten Systemkonfigurationsbeschreibung (SCD), Gerätekonfigurationsdaten erzeugt werden. Mittels eines als Logical Node Type Editor (61) ausgeführten Bearbeitungsprogramms (61) werden projektspezifische Bibliotheken (64) der für die frei programmierbare Steuerung erforderlichen Logical Node Typen erstellt und mittels eines Steuerungskonfigurationswerkzeug (62) wird eine Auswahl der zuvor erstellten Bibliothek (64) getroffen. Daraus werden die für das Steuerungs- oder Automatisierungssystem vorgesehenen gerätespezifischen Konfigurierungsbeschreibungen (ICD) erzeugt.

## Beschreibung

Die Erfindung betrifft ein Verfahren zur Konfigurierung einer frei programmierbaren Steuerungseinrichtung für die Integration von intelligenten Feldgeräten in ein Steuerungs- oder Automatisierungssystem mit einer flexibel ausbaubaren Hardwarestruktur gemäß Anspruch 1. Weiterhin betrifft die Erfindung eine Anordnung zur Ausführung des Verfahrens. Die Erfindung findet insbesondere Verwendung in der Prozessautomation oder Maschinensteuerung zum Steuern von Prozessen und/oder Anlagenkomponenten.

Automatisierungssysteme zur Steuerung eines technischen Prozesses oder einer technischen Anlage umfassen üblicherweise eine Steuerungseinrichtung (SPS), die in einem Verbund einer Vielzahl von intelligenten elektrischen Geräten, auch Intelligent Electronic Devices (IED) genannt, integriert werden. Intelligente elektronische Geräte sind mikroprozessorbasierte Geräte wie beispielsweise Schutz- und Steuergeräte, Motorschutzgeräte, intelligente Schalter und Spannungsregler, Frequenzumrichter, Druck- und Temperaturmessumformer und Durchflussmesser.

Die Kommunikation zwischen der Steuereinrichtung und den intelligenten elektrischen Geräten (IED) wird üblicherweise mittels eines Kommunikationsprotokolls, vorzugsweise über den Kommunikationsstandard IEC 61850 ausgeführt und ist beispielsweise in der EP 1 976 281 A1 beschrieben. Zum Datenaustausch innerhalb des Systems ist es erforderlich, die Geräte (IED's) mittels eines Programmierwerkzeuges oder Programmiergerätes, auch Engineering Tool genannt, zu konfigurieren und die Geräte in das nach dem IEC 61850 Standard arbeitende Kommunikationsnetzwerk einzubinden.

Um Information zwischen den Geräten, aus welchen das Steuerungs- oder Automatisierungssystem gebildet wird, auszutauschen also Daten zwischen Funktionen auszutauschen, welche in den Geräten implementiert sind, werden zunächst die Kommunikationsknoten als der kleinste Teil einer Funktion, welche Daten mit anderen Funktionen austauscht, betrachtet. Diese logischen Knoten führen Teilfunktionen für die Gesamtfunktion aus und können einzeln oder zusammen in Geräten implementiert sein.

Der IEC61850 Kommunikationsstandard definiert für die intelligenten elektrischen Geräte die Abbildung der zu kommunizierenden Daten als Kommunikationsknoten, auch Logical Nodes genannt, mit einer vorab festgelegten Struktur, da ein IED Typ, auch als Logical Node Typ bezeichnet, normalerweise genau für einen Anwendungstyp erstellt wird.

Frei programmierbare Steuerungen, wie beispielsweise die AC500 der Firma ABB sind für verschiedene Anwendungsgebiete einsetzbar, jedoch werden für die jeweiligen Anwendungsgebiete gemäß dem Kommunikationsstandard IEC61850 verschiedenen Logical Node Typen benötigt.

Die Konfiguration wird dazu mittels eines Gerätekonfigurationswerkzeuges, auch IED- Configurator genannt, und eines Systemkonfigurationswerkzeuges, auch System Configurator genannt, gemäß dem IEC 61850 Standard erstellt.

Im System Configurator ist die Systemkonfiguration, auch als System Specification Description (SSD) bezeichnet, abgelegt. In der System Specification Description ist der Datenaustausch vom System Configurator zum IED- Configurator gemäß dem IEC 61850 Standard festgelegt.

Im IED- Configurator werden aus einer bereitgestellten Konfigurationsgerätebeschreibung, auch Configured IED Description (CID) genannt, und der vom System Configurator bereitgestellten Systemkonfigurationsbeschreibung (SCD), die Gerätekonfigurationsdaten erzeugt, und gemäß dem IEC 61850 Standard vom IED- Configurator in die IED- Geräte übertragen.

Die Gerätekonfigurationsbeschreibungen der IED- Geräte, auch IED Capability Description, (ICD) genannt, enthalten die jeweilige Konfigurierung der im Steuerungssystem vorgesehenen Geräte. Sie werden von den Geräteherstellern als Programm für die entsprechenden Feldgeräten auf einem Speichermedium beigefügt und dem System Configurator zur Verarbeitung bereitgestellt. Sie ermöglichen zusammen mit der im System Configurator abgelegten Substation Configuration Description (SCD) die Erstellung der Konfiguration für jedes im System vorgesehene Gerät. Die so erstellten gerätespezifischen Konfigurierungsdateien, welche die jeweilige Konfigurierung der im Steuerungssystem vorgesehenen Geräte enthalten, werden nunmehr in Geräte des Steuerungs- oder Automatisierungssystems eingebunden.

Insbesondere eine Anbindung flexibel konfigurierbarer Geräte an das nach dem IEC 61850 Standard arbeitende Kommunikationsnetzwerk und deren Konfiguration mittels des Programmierwerkzeuges am Konfigurations- PC ist mit einem nicht unerheblichen Konfigurationsaufwand verbunden, da bei der großen Anzahl unterschiedlicher Anwendungsprofile und den darin enthaltenen optionalen Teilen viele Stellen in der Konfiguration angepasst werden müssen.

Der Erfindung liegt daher die Aufgabe zugrunde, ein Verfahren und eine Anordnung zur Ausführung des Verfahrens zur Konfigurierung einer frei programmierbaren Steuerungseinrichtung für die Integration von intelligenten Feldgeräten in ein Steuerungs- oder Automatisierungssystem bereitzustellen, welche die vorgenannten Nachteile vermeiden und insbesondere die Möglichkeit Geräte verschiedener Hersteller mit vertretbarem Aufwand in das Steuerungs- oder Automatisierungssystem zu integrieren.

Diese Aufgabe wird durch ein Verfahren zur Konfigurierung einer frei programmierbaren Steuerungseinrichtung für die Integration von intelligenten Feldgeräten in ein Steuerungs- oder Automatisierungssystem mit den im Anspruch 1 angegebenen Merkmalen gelöst. Vorteilhafte Ausgestaltungen und eine Anordnung zur Ausführung des Verfahrens sind in weiteren Ansprüchen angegeben.

Das erfindungsgemäße Verfahren ist dafür vorgesehen intelligente elektrische Geräten (IED's) an eine frei programmierbare Steuerungseinrichtung anzuschließen, wobei von einer flexibel ausbaubaren Hardwarestruktur ausgegangen wird und dazu neu erzeugte Gerätebeschreibungen angepasst an den jeweiligen Anwendungsfall des Steuerungs- oder Automatisierungssystems bereitgestellt werden.

Mit den neu erzeugten anwendungsspezifischen oder projektspezifischen Gerätebeschreibungen können in vorteilhafter Weise neue Geräte unterschiedlichster Gerätehersteller in das Steuerungs- oder Automatisierungssystem mit vergleichbar geringem Konfigurationsaufwand eingebunden werden.

Die Konfiguration des Steuerungs- oder Automatisierungssystem wird dabei mittels eines Gerätekonfigurationswerkzeuges (IED- Configurator) und eines Systemkonfigurationswerkzeuges (System Configurator) erstellt. Im Systemkonfigurationswerkzeug wird dazu eine Systemspezifikationsbeschreibung (System Specification Description) abgelegt, welche den Datenaustausch vom Systemkonfigurationswerkzeug zum Gerätekonfigurationswerkzeug gemäß einem zuvor definierten Kommunikationsprotokoll festlegt. Im Gerätekonfigurationswerkzeug werden aus einer bereitgestellten Konfigurationsbeschreibungsdatei (CID) und der vom Systemkonfigurationswerkzeug bereitgestellten Systemkonfigurationsbeschreibung (SCD) Gerätekonfigurationsdateien erzeugt und gemäß dem zuvor festgelegtem Kommunikationsprotokoll vom Gerätekonfigurationswerkzeug in die IED- Geräte übertragen.

Erfindungsgemäß werden mittels eines als Logical Node Type Editor ausgeführten Bearbeitungsprogramms projektspezifische Bibliotheken, welche für verschiedenen Anwendungsbereiche bzw. Anwendungsprofile die entsprechenden Informationen beinhalten, der für die frei programmierbare Steuerung erforderlichen Kommunikationsknoten zur Abbildung der zu kommunizierenden Daten für die Geräte, auch Logical Node Typen genannt, erstellt.

Daraus wird mittels eines Steuerungskonfigurationswerkzeuges eine Auswahl der zuvor erstellten Bibliothek für die reale Anlagenkonfiguration getroffen. Mittels der ausgewählten Bibliothek werden im Steuerungskonfigurationswerkzeug die für das Steuerungs- oder Automatisierungssystem vorgesehenen gerätespezifischen Konfigurierungsbeschreibungen ICD erzeugt, die einen fest vorgegebenen Satz von Logical Node Types für das Steuerungs- oder Automatisierungssystem bilden und der weiteren Verarbeitung bereitgestellt werden.

Vorzugsweise wird der Datenaustausch vom Gerätekonfigurationswerkzeug zum Gerät und vom Systemkonfigurationswerkzeug zum Gerätekonfigurationswerkzeugs gemäß dem IEC 61850 Standard ausgeführt.

Die mittels dem Logical Node Type Editor erzeugten Logical Node Typen werden dabei so weiterverarbeitet, als wenn die Steuerung einen fest vorgegebenen Satz von Logical Node Types beinhalten würde und die Standardwerkzeuge gemäß IEC61850- Standard können eingesetzt werden, um die in der IEC61850 konforme Kommunikation im System zu konfigurieren.

Gemäß dem erfindungsgemäßen Verfahrens werden so in vorteilhafter Weise in der Systemkonfiguration über eine vorgelagerte Ebene, im folgenden auch als flexibles Konfigurationstool bezeichnet, zur Erzeugung gerätespezifischer Konfigurierungsbeschreibungen ICD für eine frei programmierbare Steuerungseinrichtung mit einer flexiblen Feldgerätestruktur, die Anwendungsprofile und Optionen in Logical Node Typen abgelegt und damit ein flexibles Gerät in eine bestehende Systemkonfigurations-Tool-Landschaft, auch als Standardkonfigurationstool bezeichnet eingebunden, welche nur intelligente Feldgeräte mit einer vorab festgelegten festen Struktur kennt und unterstützt.

Das flexible Konfigurationstool weist dazu einen flexibler Geräte Type und eine Logical Node Type Bibliothek auf, wohingegen das Standardkonfigurationstool nur einen fixen Geräte Type kennt und unterstützt.

Die vom flexiblen Konfigurationstool erzeugten gerätespezifischer Konfigurierungsbeschreibungen werden in das Standardkonfigurationstool übertragen und mit der dort abgelegten Substation Configuration Description zu der Abbildung vom an das Anwendungsprofil mit Optionen angepassten Gerätetyps zur projektspezifischen Instanz weiterverarbeitet.

Eine Anordnung zur Ausführung des vorab beschriebenen Verfahrens ist dem Anspruch 3 zu entnehmen.

Die erfindungsgemäße Anordnung zur Konfigurierung einer frei programmierbaren Steuerungseinrichtung für die Integration von intelligenten Feldgeräten in ein Steuerungs- oder Automatisierungssystem mit einer flexibel ausbaubaren Hardwarestruktur umfasst ein Gerätekonfigurationswerkzeug (IED- Configurator) und einem Systemkonfigurationswerkzeug (System Configurator) zur Erstellung der Konfiguration des Steuerungs- oder Automatisierungssystem. Im Systemkonfigurationswerkzeug ist dazu eine Systemspezifikationsbeschreibung (System Specification Description) abgelegt, welche den Datenaustausch vom Systemkonfigurationswerkzeug zum Gerätekonfigurationswerkzeug gemäß einem definierten Kommunikationsprotokoll festlegt.

Im Gerätekonfigurationswerkzeug ist eine Konfigurationsbeschreibungsdatei (CID) abgelegt, welche den Datenaustausch vom Gerätekonfigurationswerkzeug zum Gerät gemäß einem definierten Kommunikationsprotokoll festlegt.

Die erfindungsgemäße Anordnung umfasst ein als Logical Node Type Editor ausgeführten Bearbeitungsprogramm, welches projektspezifische Bibliotheken der für die frei programmierbare Steuerung erforderlichen Kommunikationsknoten zur Abbildung der zu kommunizierenden Daten für die Geräte, auch Logical Node Typen genannt, erstellt sowie ein Steuerungskonfigurationswerkzeug, dass eine Auswahl einer zuvor erstellten Bibliothek trifft. Daraus wird mittels dem Steuerungskonfigurationswerkzeug eine Auswahl der zuvor erstellten Bibliothek entsprechend dem Anwendungsprofil getroffen und die für das Steuerungs- oder Automatisierungssystem vorgesehenen gerätespezifische Konfigurierungsbeschreibungen (ICD) erzeugt, welche einem fest vorgegebenen Satz von Logical Node Types für das Steuerungs- oder Automatisierungssystem entsprechen und zur weiteren Verarbeitung zur Verfügung stehen. Anhand der in den folgenden Figuren dargestellten Ausführungsbeispiele sollen die Erfindung sowie vorteilhafte Ausgestaltungen und Verbesserungen der Erfindung näher erläutert und beschrieben werden.

Es zeigen:
- Fig. 1: eine beispielhafte IEC 61850 Konfiguration zur Integration von intelligenten Feldgeräten mit einer festen Struktur nach dem Stand der Technik,
- Fig. 2: eine beispielhafte Anordnung zur Konfigurierung einer frei programmierbaren Steuerungseinrichtung mit einer flexiblen Feldgerätestruktur (flexibel ausbaubaren Hardwarestruktur),
- Fig. 3: einen beispielhaften Verfahrensablauf zur Übertragung der erstellten gerätespezifischen Konfigurierungsbeschreibungen und
- Fig. 4: beispielhaft einen Logical Node Typ Editor zur Erzeugung projektspezifischer Bibliotheken für die Kommunikationsknoten.

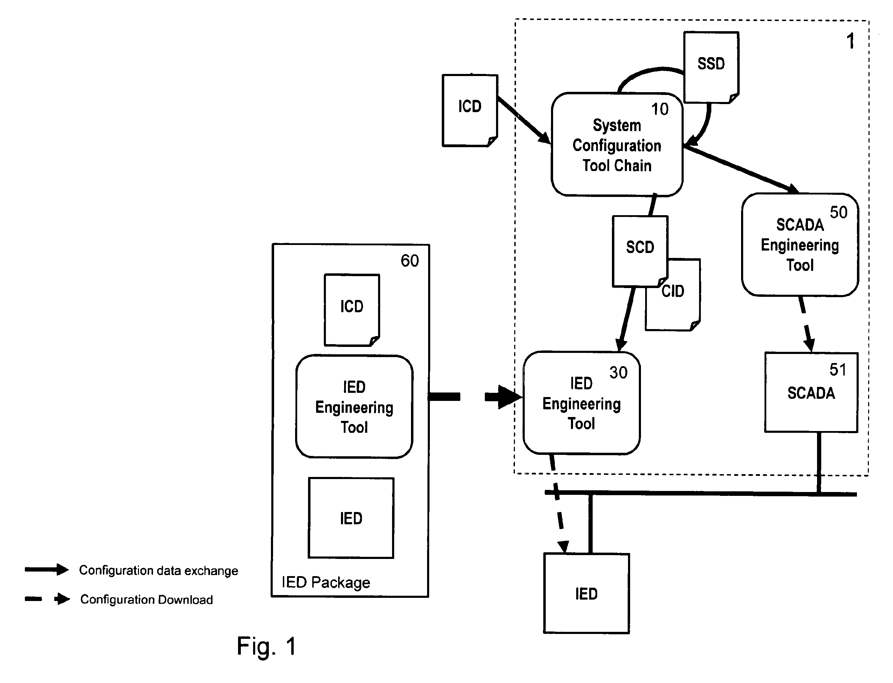

Fig. 1 ein beispielhaftes nach dem IEC 61850- Standard arbeitendes Standardkonfigurationstool 1 zur Integration von intelligenten Feldgeräten IED mit einer vorab festgelegten Struktur nach dem Stand der Technik. Bevor ein Steuerungssystem einsatzfähig ist, wird die dafür vorgesehene Hardware IED im Engineering Tool 1 zum Konfigurieren der im System vorgesehenen Geräte als Bestandteil eines SPS- oder Steuerungsprojektes abgebildet, wobei im Steuerungsprojekt u. a. Informationen über Ein-/ Ausgangsadressen der intelligenten Feldgeräte IED gespeichert und einem Anwenderprogramm zugänglich gemacht.

Der Datenaustausch vom Engineering Tool 1 zu den Geräten des Steuerungs- oder Automatisierungssystems erfolgt nach dem IEC- Standard 61850 und ist in der IEC 61850-6 beschrieben. **Fig. 1** zeigt die Konfigurationsbeschreibungsdateien System Specification Description SSD, Substation Configuration Description SCD, IED Capability Description ICD und Configured IED- Description CID sowie den Austausch der gezeigten Konfigurationsdaten nach dem Stand der Technik, was nachfolgend näher erläutert ist.

Für die Konfiguration stehen die beiden Standardkonfigurationswerkzeuge IED- Configurator 30 und System Configurator 10 zur Verfügung. Die Konfiguration des Steuerungssystems wird mittels dem IED- Configurator 30 und dem System Configurator 10 gemäß dem IEC 61850 Standard erstellt.

Im System Configurator 10 ist dazu eine System Specification Description SSD abgelegt, welche den Datenaustausch vom System Configurator 10 zum IED- Configurator 30 gemäß dem IEC 61850 Standard festlegt.

Im IED- Configurator 30 werden aus einer bereitgestellten IED- Konfigurationsbeschreibung (CID) und der vom System Configurator 10 bereitgestellten Systemkonfigurationsbeschreibung (SCD) Gerätekonfigurationsdateien erzeugt, welche für die Übertragung in die Standard IEC61850 Kommunikationsmodule der Geräte IED mittels eines Konfigurationsdownloads vorgesehen sind.

Beim Start des Projektes werden die Gerätebeschreibungen 60 der IED- Geräte, welche üblicherweise von den Geräteherstellern als Programm den entsprechenden Feldgeräten IED auf einem Speichermedium beigefügt werden, in den IED- Configurator 30 übertragen und es wird zusammen mit der im System Configurator 10 abgelegten IED Capability Description, ICD eine Konfiguration für jedes im System vorgesehene Gerät IED erstellt. Die so erstellte gerätespezifischen Substation Configuration Description SCD, welche die jeweilige Konfigurierung der im Steuerungssystem vorgesehenen Geräte enthalten, werden nunmehr über den IED- Configurator 30 in die Geräte des Steuerungssystems übertragen.

In einer vorteilhaften Ausgestaltung können auch weitere IEC 61850 Projekte mit entsprechenden Schnittstellen zum Steuerungsprojekt, wie beispielsweise ein Datenerfassungs- und Datenüberwachungssystem (SCADA) 50 mit einem SCADA Engineering Tool in das Gesamtsystem eingebunden sein.

Gemäß dem erfindungsgemäßen Verfahrens, welches die folgenden Figuren zeigen, werden in der Systemkonfiguration anstelle der Verwendung von fest vorgegebenen Geräten, die entsprechend eines bestimmten Anwendungsprofils abgebildet werden, über eine vorgelagerte Ebene 2 die Anwendungsprofile und Optionen in Logical Node Type abgelegt und damit ein flexibles Gerät in eine bestehende Systemkonfigurations-Tool-Landschaft gemäß der Fig. 1 eingebunden, welche nur feste Geräte kennt und unterstützt.

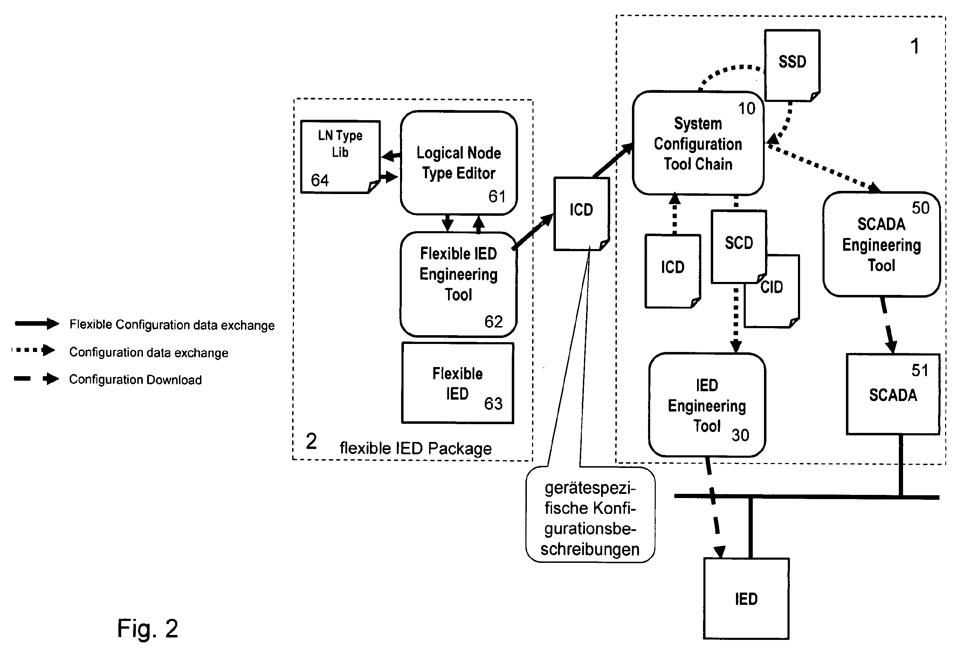

Fig. 2 zeigt links neben dem nach dem IEC 61850- Standard arbeitenden Standardkonfigurationstool 1 zur Integration von intelligenten Feldgeräten mit einer festen Struktur, wie in Figur 1 beschrieben, beispielhaft eine Anordnung 2, auch flexibles Konfigurationstool genannt, zur Erzeugung gerätespezifischer Konfigurierungsbeschreibungen ICD für eine frei programmierbare Steuerungseinrichtung mit einer flexiblen Feldgerätestruktur nach dem erfindungsgemäßen Verfahren. Der Datenaustausch der flexiblen Konfiguration ist mittels durchgezeichneter Pfeile gekennzeichnet.

Die Anordnung 2 gemäß **Fig. 2** zeigt die erfindungsgemäß vorgesehenen flexiblen Konfigurationswerkzeuge Logical Node Type Editor 61 zur Anpassung an die Anwendungsprofile und den darin enthaltenen optionalen Teilen und Steuerungskonfigurationswerkzeug 62 zur Erstellung von gerätespezifischen Konfigurierungsbeschreibungen ICD. Dazu tauscht der Logical Node Type Editor 61 mit einer Logical Node Type Bibliothek 64, in der applikationsspezifische bzw. projektspezifische Funktionsblöcke für verschiedene Anwendungsgebiete der frei programmierbaren Steuerungen für unterschiedliche Anwendungsfälle abgelegt sind, und dem Steuerungskonfigurationswerkzeug 62 Konfigurationsdaten aus, was im nachfolgend näher erläutert wird.

Das Steuerungskonfigurationswerkzeug 62, auch als flexibles IED Engineering Tool bezeichnet, erzeugt mittels des Logical Node Type Editors 61 die projektspezifischen Logical Node Type Bibliotheken 64, aus denen in Abhängigkeit von den verwendeten intelligenten Geräten IED eine Konfigurierungsbeschreibung ICD für jedes im System vorgesehene Gerät erzeugt wird. Diese Konfigurationsbeschreibung wird nachfolgend auch gerätespezifischer Konfigurierungsbeschreibungen genannt.

Die erzeugten gerätespezifischen Konfigurierungsbeschreibungen ICD stellen einen fest vorgegebenen Satz von Logical Node Types für die frei programmierbare Steuerung des Steuerungs- oder Automatisierungssystems bereit, welche für die Übertragung in die Standard IEC61850 Kommunikationsmodule der projektspezifisch ausgewählten Geräte 63 mittels eines Konfigurationsdownloads vorgesehen sind.

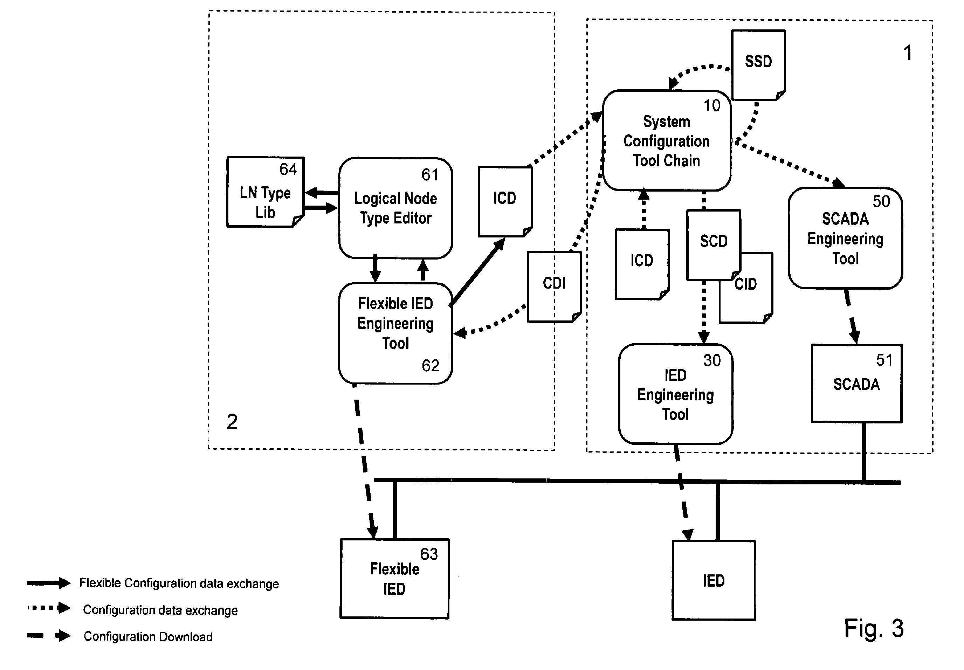

**Fig.** 3 zeigt einen beispielhaften Verfahrensablauf zur Übertragung der im Steuerungskonfigurationswerkzeug 62 mittels dem Logical Node Type Editor 61 und der projektspezifischen Bibliotheken 64 erstellten gerätespezifischer Konfigurierungsbeschreibungen ICD entsprechend dem jeweils vorgesehenen Anwendungsfall für das Steuerungs- oder Automatisierungssystem.

Die erzeugten gerätespezifischer Konfigurierungsbeschreibungen ICD werden wie die Gerätebeschreibungen 60 der IED- Geräte, die von den Geräteherstellern als Programm den entsprechenden Feldgeräten auf einem Speichermedium beigefügt sind, in das Standardkonfigurationstool übertragen und im System Configurator 10 mit der dort abgelegten Substation Configuration Description SCD zu der Abbildung vom an das Anwendungsprofil mit Optionen angepassten Gerätetyps zur projektspezifischen Instanz, nachfolgend als CDI bezeichnet, weiterverarbeitet. Die CDI werden dann dem Steuerungskonfigurationswerkzeug 62 des flexiblen Konfigurationstools 2 wieder zur Verfügung gestellt und in die Kommunikationsmodule der flexiblen Geräte 63 mittels eines Konfigurationsdownloads übertragen.

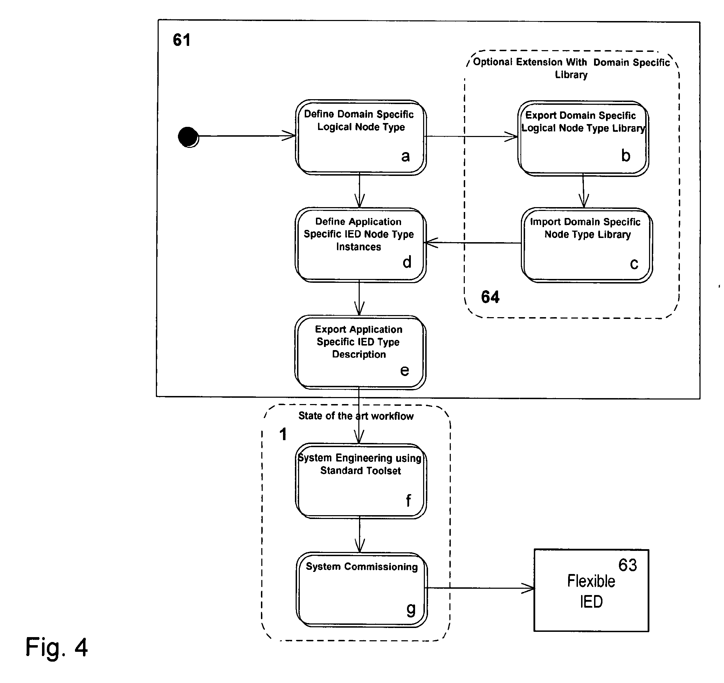

In **Fig.** 4 ist beispielhaft ein Logical Node Typ Editor 61 zur Erzeugung projektspezifischer Bibliotheken 64, welche für verschiedenen Anwendungsfälle bzw. Steuerungsprojekte die entsprechenden gerätespezifischen Informationen beinhalten.

Nachdem in einem ersten Schritt a entsprechend dem gewünschten Anwendungsprofil mit den gewünschten Optionen ein Logical Node Typen im Logical Node Typ Editor 61 festgelegt wurden, wird daraus in einem zweiten Schritt b die anlagentypspezifische Logical Node Type Bibliothek 64 erzeugt, die in einem dritten Schritt c zurück in den Logical Node Typ Editor 61 importiert wird, um daraus in einem weiteren Schritt d mit den zuvor festgelegten anwendungsprofilspezifischen Logical Node Typen anwendungsspezifische oder projektspezifische IED Node Type Instanzen zu bilden.

Die anwendungsspezifischen IED Node Type Instanzen werden in einem folgenden Schritt e als IED Type Description fester Struktur für das Standardkonfigurationstool 1 aufbereitet, in einem vorletzten Schritt f in das Standardkonfigurationstool 1 übertragen und in einem letzten Schritt g zur Übergabe in das Steuerungssystem bereitgestellt.

## Patentansprüche

1. Verfahren zur Konfigurierung einer frei programmierbaren Steuerungseinrichtung für die Integration von intelligenten elektrischen Feldgeräten (IED) in ein Steuerungs- oder Automatisierungssystem mit einer flexibel ausbaubaren Hardwarestruktur, wobei
- die Konfiguration des Steuerungs- oder Automatisierungssystem mittels eines Gerätekonfigurationswerkzeug (30) und eines Systemkonfigurationswerkzeug (10) erstellt wird,
- im Systemkonfigurationswerkzeug (10) dazu eine Systemspezifikationsbeschreibung (SSD) abgelegt wird, welche den Datenaustausch vom Systemkonfigurationswerkzeug (10) zum Gerätekonfigurationswerkzeug (30) gemäß einem definierten Kommunikationsprotokoll festlegt,
- im Gerätekonfigurationswerkzeug (30) eine Konfigurationsgerätebeschreibung (CID) bereitgestellt wird, welche den Datenaustausch vom Gerätekonfigurationswerkzeug (30) zum Gerät (IED) gemäß einem definierten Kommunikationsprotokoll festlegt, und
- im Gerätekonfigurationswerkzeug (30) aus der bereitgestellten Konfigurationsgerätebeschreibung (CID) und der vom Systemkonfigurationswerkzeug (10) bereitgestellten Systemkonfigurationsbeschreibung (SCD), Gerätekonfigurationsdaten erzeugt werden,
**dadurch gekennzeichnet, dass**
- mittels eines als Logical Node Type Editor (61) ausgeführten Bearbeitungsprogramms (61) projektspezifische Bibliotheken (64) der für die frei programmierbare Steuerung erforderlichen Logical Node Typen erstellt werden,
- mittels eines Steuerungskonfigurationswerkzeug (62) eine Auswahl der zuvor erstellten Bibliothek (64) getroffen wird,
- daraus die für das Steuerungs- oder Automatisierungssystem vorgesehenen gerätespezifischen Konfigurierungsbeschreibungen (ICD) erzeugt werden, die einen fest vorgegebenen Satz von Logical Node Types für das Steuerungs- oder Automatisierungssystem bilden und zur weiteren Verarbeitung bereitgestellt werden.

2. Verfahren nach Anspruch 1, **dadurch gekennzeichnet, dass** der Datenaustausch vom Gerätekonfigurationswerkzeug (30) zum Gerät (IED) und vom Systemkonfigurationswerkzeug (10) zum Gerätekonfigurationswerkzeug (30) gemäß dem IEC 61850 Standard ausgeführt wird.

3. Anordnung zur Konfigurierung einer frei programmierbaren Steuerungseinrichtung für die Integration von intelligenten Feldgeräten in ein Steuerungs- oder Automatisierungssystem mit einer flexibel ausbaubaren Hardwarestruktur mit
- einem Gerätekonfigurationswerkzeug (30) und einem Systemkonfigurationswerkzeug (10) zur Erstellung der Konfiguration des Steuerungs- oder Automatisierungssystem,
- im Systemkonfigurationswerkzeug (10) dazu eine Systemspezifikationsbeschreibung (SSD) abgelegt ist, welche den Datenaustausch vom Systemkonfigurationswerkzeug (10) zum Gerätekonfigurationswerkzeug (30) gemäß einem definierten Kommunikationsprotokoll festlegt, und
- das Gerätekonfigurationswerkzeug (30) eine Konfigurationsbeschreibungsdatei (CID) bereitstellt, welche den Datenaustausch vom Gerätekonfigurationswerkzeug (30) zum Gerät (IED) gemäß einem definierten Kommunikationsprotokoll festlegt, und
- das Gerätekonfigurationswerkzeug (30) aus der bereitgestellten Konfigurationsgerätebeschreibung (CID) und der vom Systemkonfigurationswerkzeug (10) bereitgestellten Systemkonfigurationsbeschreibung (SCD), Gerätekonfigurationsdaten erzeugt,
**dadurch gekennzeichnet, dass**
- ein als Logical Node Type Editor (61) ausgeführtes Bearbeitungsprogramm (61) projektspezifische Bibliotheken (64) der für die frei programmierbare Steuerung erforderlichen Logical Node Typen erstellt,
- ein Steuerungskonfigurationswerkzeug (62) eine Auswahl der zuvor erstellten Bibliothek (64) trifft,
- daraus die für das Steuerungs- oder Automatisierungssystem vorgesehenen gerätespezifischen Konfigurierungsbeschreibungen (ICD) erzeugt, die einen fest vorgegebenen Satz von Logical Node Types für das Steuerungs- oder Automatisierungssystem entsprechen und zur weiteren Verarbeitung zur Verfügung stehen
